# EUROPEAN PATENT APPLICATION

(11) **EP 4 729 799 A1**
(43) Date of publication of application: **22.04.2026**
(21) Application number: 25204473.0
(22) Date of filing: 24.09.2025
(51) Int. Cl.: F16D 55/2265, F16D 55/227, F16D 65/00

(54) **BRAKE ASSEMBLY HAVING GUIDE PIN ASSEMBLY**

(30) Priority: 01.10.2024 US 202418903449
(71) Applicant: ArvinMeritor Technology, LLC, Troy, MI 48084 (US)
(72) Inventor: Catania, Michael, Troy, 48084 (US)
(74) Representative: Whitfield, Jack Stephen

(57) **Abstract**

A brake assembly comprising a brake carrier, a brake caliper, and a guide pin assembly. The guide pin that slidably couples the brake caliper to the brake carrier. The guide pin assembly comprises a unitary cap bushing, a sleeve, a fastener. The fastener couples the sleeve to the brake carrier. The unitary cap bushing is moveable with respect to the sleeve.

## Description

### TECHNICAL FIELD

The invention relates to a brake assembly and a guide pin assembly.

### BACKGROUND

A guide assembly for a disc brake is disclosed in U.S. Patent No. 9,845,837. This application claims the benefit of priority under 35 U.S.C. § 119(e) to U.S. Provisional Application No. 18/903449 filed on October 1, 2024, and titled "Brake assembly having a guide pin assembly", the entire disclosure of which is hereby incorporated by reference in its entirety.

### SUMMARY

The invention relates to a brake assembly. The brake assembly comprises a brake carrier, a brake caliper, and a guide pin assembly. The brake caliper defines a bore. The bore extends along an axis. The guide pin assembly slidably couples the brake caliper to the brake carrier. The guide pin assembly comprises a unitary cap bushing, a sleeve, and a fastener. The unitary cap bushing is at least partially received in the bore. The unitary cap bushing is secured to the brake caliper. The unitary cap bushing is a one-piece component that comprises a tubular wall and a cap. The tubular wall encircles and at least partially defines a cavity. The cavity extends along the axis. The tubular wall comprises an end surface. The end surface is disposed opposite the cap. The cap extends from the tubular wall. The cap encloses an end of the unitary cap bushing. The sleeve is received in the cavity. The sleeve engages the tubular wall such that the unitary cap bushing is moveable along the axis with respect to the sleeve. The fastener is disposed in the sleeve. The fastener couples the sleeve to the brake carrier.

The tubular wall may further comprise an exterior side. The exterior side may face away from the axis. The exterior side may engage the brake caliper in the bore. The cap may further comprise a cap exterior side. The cap exterior side may face away from the axis. The cap exterior side may engage the brake caliper in the bore. The cap exterior side may be disposed farther from the axis than the exterior side of the tubular wall. The cap exterior side and the exterior side of the tubular wall may be disposed at a common radial distance from the axis.

The brake caliper may further comprise a threaded region. The threaded region may be disposed in the bore. The unitary cap bushing may further comprise a threaded portion. The threaded portion may mate with the threaded region and secure the unitary cap bushing to the brake caliper. The threaded portion of the unitary cap bushing may be disposed on the cap. The threaded portion of the unitary cap bushing may be disposed on the tubular wall.

The unitary cap bushing may be secured to the brake caliper with a fastener. The fastener may be disposed in the bore.

The brake caliper may further comprise a brake caliper groove. The brake caliper groove may encircle the bore. The brake caliper groove may extend away from the axis. The brake caliper groove may extend from the bore. The cap may further comprise a cap exterior side. The cap exterior side may face away from the axis. The cap may further comprise a cap groove. The cap groove may extend from the cap exterior side toward the axis. The fastener may be received in the brake caliper groove and the cap groove.

The unitary cap bushing may be secured to the brake caliper with a fastener that is disposed outside of the bore. The cap may further comprise a cap flange. The cap flange may be disposed outside of the bore. The cap flange may extend away from the axis. The fastener may secure the cap flange to the brake caliper.

The brake caliper may further comprise a recess. The recess may extend away from the axis. The recess may extend from the bore. The unitary cap bushing may further comprise a protrusion. The protrusion may extend away from the axis. The protrusion may be received in the recess. The protrusion may secure the unitary cap bushing to the brake caliper.

The fastener, the sleeve, and the unitary cap bushing may cooperate to define a chamber. The chamber may be disposed along the axis between the fastener and the cap. The chamber may contain lubricant.

The unitary cap bushing may be spaced apart from the brake carrier. The unitary cap bushing may not contact the brake carrier. The sleeve may engage the brake carrier.

The brake assembly may further comprise a flexible boot. The flexible boot may extend between the brake carrier and the brake caliper. The flexible boot may further comprise a mounting rim. The mounting rim of the flexible boot may be disposed in the bore. The mounting rim may be secured between the unitary cap bushing and the brake caliper.

The brake caliper may further comprise a brake caliper boot groove. The brake caliper boot groove may encircle the bore. The brake caliper boot groove may extend from the bore. The brake caliper boot groove may extend away from the axis. The mounting rim of the flexible boot may be disposed in the brake caliper boot groove.

The tubular wall may further comprise a guide surface. The guide surface may extend from the end surface of the tubular wall toward the exterior side of the tubular wall. The flexible boot may engage the guide surface. The guide surface may be disposed at an oblique angle with respect to the end surface. The guide surface may be disposed at an oblique angle with respect to the exterior side. The guide surface may extend farther from the axis as the guide surface extends away from the end surface.

The tubular wall may further comprise a step surface. The step surface may extend from an end of the guide surface to the exterior side of the tubular wall. The mounting rim may engage the step surface.

The invention also relates to a unitary cap bushing for a brake caliper. The unitary cap bushing comprises a tubular wall and a cap. The tubular wall encircles and at least partially defines a cavity. The tubular wall comprises an end surface. The cap that is disposed opposite the end surface. The cap extends from the tubular wall. The cap encloses an end of the tubular wall. The unitary cap bushing is a one-piece component.

### BRIEF DESCRIPTION OF THE DRAWINGS

Figure 1 is a perspective view of an example of a brake assembly and a brake rotor.
Figure 2 is a section view along section line 2-2.
Figure 3 is a magnified view of a portion of Figure 2 showing an example of a guide pin assembly.
Figure 4 is a magnified view showing a second example of a guide pin assembly.
Figure 5 is a magnified view showing a third example of a guide pin assembly.
Figure 6 is a magnified view showing a fourth example of a guide pin assembly.
Figure 7 is a magnified view showing a fifth example of a guide pin assembly.
Figure 8 is a magnified view showing a sixth example of a guide pin assembly.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It will also be understood that, although the terms first, second, etc. are, in some instances, used herein to describe various elements, these elements should not be limited by these terms. These terms are only used to distinguish one element from another. For example, a first element could be termed a second element, and similarly a second element could be termed a first element without departing from the scope of the various described embodiments. The first element and the second element are both elements, but they are not the same element.

The terminology used in the description of the various described embodiments is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

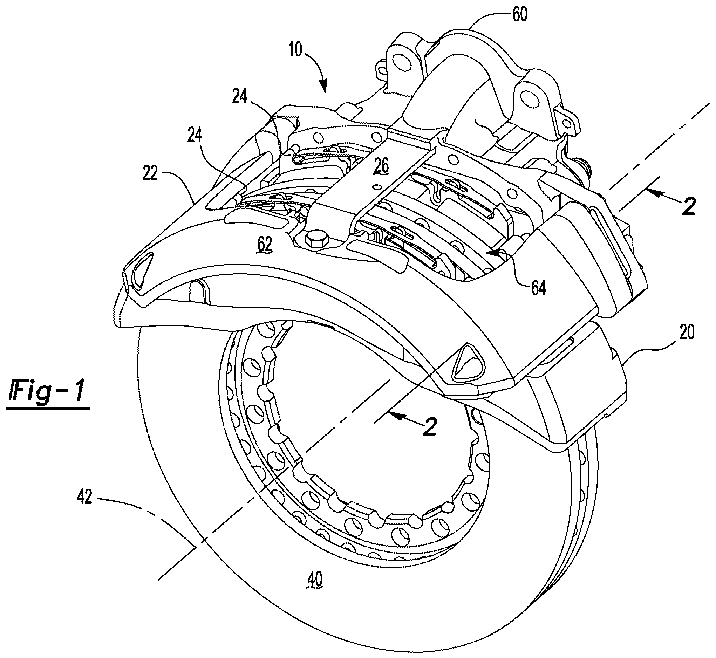

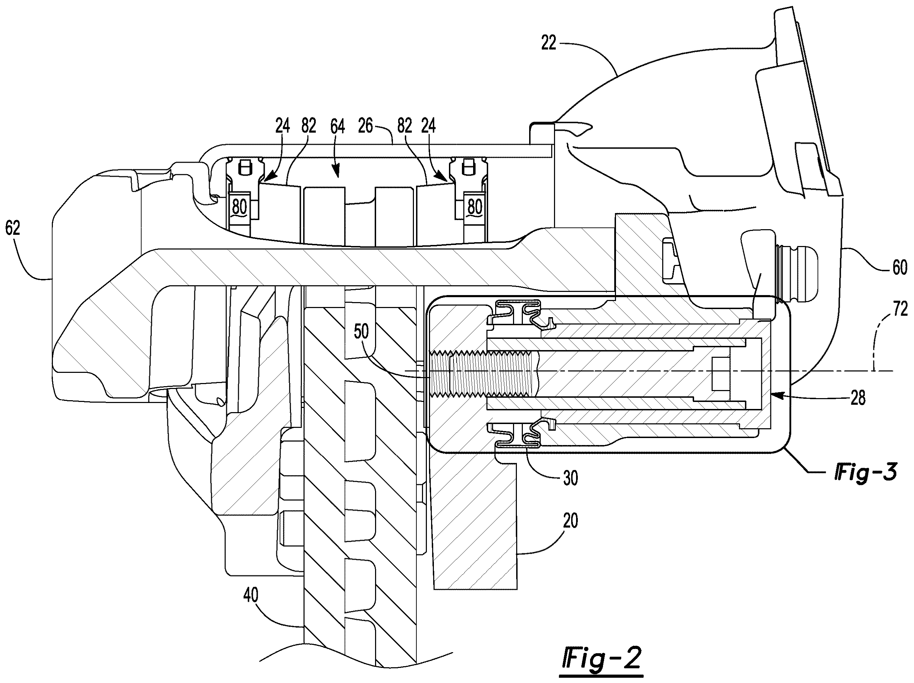

Referring to Figure 1, an example of a brake assembly 10 is shown. The brake assembly 10 may be provided as part of a vehicle, such as a motor vehicle like a truck, bus, farm equipment, military transport or weaponry vehicle, or cargo loading equipment for land, air, or marine vessels. The brake assembly 10 is configured as a disc brake. The brake assembly 10 comprises a brake carrier 20 and a brake caliper 22. The brake assembly 10 may also comprise a pair of brake pad assemblies 24 and a retainer bracket 26. Referring primarily to Figure 2, the brake assembly 10 also comprises at least one guide pin assembly 28 and may comprise a flexible boot 30.

Referring to Figures 1 and 2, the brake carrier 20 is configured to be mounted to the vehicle. For example, the brake carrier 20 may be directly or indirectly mounted to an axle assembly or a steering knuckle. The brake carrier 20 may be stationary and may not move with respect to the vehicle component to which it is mounted. In some configurations, the brake carrier 20 is configured to receive and support the brake pad assemblies 24 in a manner that permits the brake pad assemblies 24 to move toward and away from a brake rotor 40 while inhibiting rotation of the brake pad assemblies 24.

The brake carrier 20 may include a rotor opening through which a brake rotor 40 may extend. The brake rotor 40 is rotatable about a brake rotor axis 42 and is spaced apart from the brake carrier 20. For instance, the brake carrier 20 may straddle the brake rotor 40 and help position the brake pad assemblies 24 on opposite sides of the brake rotor 40.

Referring to Figure 2, the brake carrier 20 may include one or more fastener holes 50. A fastener hole 50 may facilitate mounting of a corresponding guide pin assembly 28. The fastener hole 50 may have any suitable configuration. In some configurations, the fastener hole 50 is threaded. The fastener hole 50 may be configured as a through hole.

Referring to Figures 1 and 2, the brake caliper 22 is moveably or slidably disposed on the brake carrier 20. The brake caliper 22 facilitates positioning of the brake pad assemblies 24 with respect to the brake rotor 40. For instance, the brake caliper 22 may be configured to position the pad assemblies 24 in engagement with opposite sides the brake rotor 40 to facilitate braking of the brake rotor 40 and facilitate retraction of the brake pad assemblies or to disengage the brake rotor 40. In some configurations, the brake caliper 22 comprises a caliper housing 60 and a caliper bridge 62.

The caliper housing 60 may be moveably disposed on the brake carrier 20. For example, the caliper housing 60 may be slidably disposed on a pair of guide pin assemblies 28 that may be fixedly disposed on the brake carrier 20. The caliper housing 60 may facilitate mounting of a brake actuator and may define an internal cavity that may receive or partially receive various components that facilitate movement of the brake pad assemblies 24, such as an operating shaft, yoke, tappet, piston, and wear adjuster mechanism. Examples of such components are described in United States Patent No. 11,718,283, which is hereby incorporated by reference in its entirety. It is further noted that the present invention is not limited to the configurations as described in United States Patent No. 11,718,283.

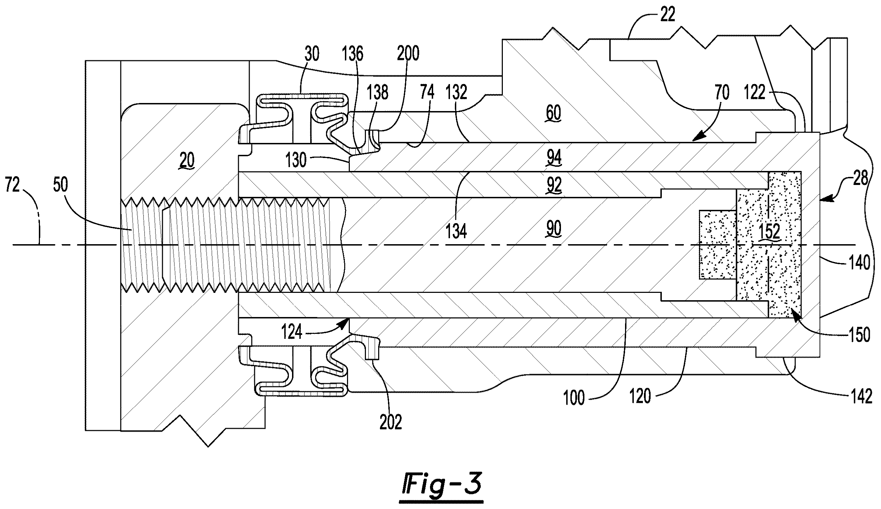

Referring primarily to Figure 3, the caliper housing 60 defines one or more bores 70. A bore 70 is configured to receive a corresponding guide pin assembly 28. In some configurations, a pair of bores 70 are provided that are disposed proximate opposite lateral sides of the brake caliper 22. A bore 70 may be configured as a through hole. Each bore 70 may extend along a corresponding axis 72. The axis 72 may extend parallel or substantially parallel to the brake rotor axis 42. The term "substantially parallel" as used herein means the same as or very close to parallel and includes features or axes that are within ±3° of being parallel each other. In some configurations, a bore 70 may have a cylindrical configuration in which the bore 70 is defined by a bore surface 74 of the brake caliper 22 or caliper housing 60. The bore surface 74 may extend around the axis 72. The bore surface 74 may be radially disposed with respect to the axis 72 or disposed at a substantially constant radial distance from the axis 72.

Referring to Figures 1 and 2, the caliper bridge 62 extends from the caliper housing 60. The caliper bridge 62 may be integrally formed with the caliper housing 60 or may be fixedly disposed on the caliper housing 60. For example, the caliper bridge 62 may be provided as a separate component that may be coupled to the caliper housing 60 with one or more fasteners, such as bolts. In at least one configuration, the caliper bridge 62 may cooperate with the caliper housing 60 to at least partially define an opening 64 that may facilitate insertion and removal of the brake pad assemblies 24.

The brake pad assemblies 24 are configured to engage the brake rotor 40 to facilitate braking of a wheel hub to which the brake rotor 40 is mounted and an associated vehicle wheel. The brake pad assemblies 24 are engageable with the brake rotor 40 to slow rotation of the brake rotor 40 and an associated wheel about the brake rotor axis 42. One brake pad assembly 24 may be positioned between the caliper housing 60 and the brake rotor 40 and may be referred to as an inboard brake pad assembly 24. The inboard brake pad assembly 24 is located to the right of the brake rotor 40 from the perspective shown in Figure 2. The other brake pad assembly 24 may be positioned on the opposite side of the brake rotor 40 between the caliper bridge 62 and the brake rotor 40 and may be referred to as an outboard brake pad assembly 24. The outboard brake pad assembly 24 is located to the left of the brake rotor 40 from the perspective shown in Figure 2. Each brake pad assembly 24 may include a backplate 80 and friction material 82.

The backplate 80 is a structural member of a brake pad assembly 24. The backplate 80 may be configured as a plate and may be made of any suitable material, such as metal or a metal alloy. In at least one configuration, a side of the backplate 80 of the inboard brake pad assembly 24 that faces away from the friction material 82 may engage or contact a tappet that may be extendable from the cavity of the caliper housing 60 to actuate the inboard brake pad assembly 24 into engagement with the brake rotor 40. A side of the backplate 80 of the outboard brake pad assembly 24 that faces away from its friction material 82 may engage or contact the caliper bridge 62.

The friction material 82 is disposed on a side of the backplate 80 that may face toward the brake rotor 40. The friction material 82 may contact the brake rotor 40 during vehicle braking.

Referring to Figures 1 and 2, the retainer bracket 26, if provided, may be coupled to the brake caliper 22. For example, the retainer bracket 26 may extend across the brake pad assemblies 24 and the opening 64 in the brake caliper 22 to help retain the brake pad assemblies 24 in the brake carrier 20 when the retainer bracket 26 is secured to the brake caliper 22. The retainer bracket 26 may be detached from or removed from the brake caliper 22 to permit removal of the brake pad assemblies 24 or installation of the brake pad assemblies 24 via the opening 64.

Referring to Figures 2 and 3, an example of a guide pin assembly 28 is shown. The guide pin assembly 28 slidably couples the brake caliper 22 to the brake carrier 20 such that the brake caliper 22 may slide along the axis 72 with respect to the brake carrier 20. In some configurations and as is best shown with reference to Figure 3, the guide pin assembly 28 includes a fastener 90, a sleeve 92, and a unitary cap bushing 94.

The fastener 90 is configured to secure or fixedly couple the sleeve 92 to the brake carrier 20. The fastener 90 may have any suitable configuration. For instance, the fastener 90 may be configured as a bolt, such as a carriage bolt, that may be received in the fastener hole 50 of the brake carrier 20. The fastener 90 may be partially received in the bore 70 of the caliper housing 60 and may extend along or around the axis 72. The fastener 90 is disposed in the sleeve 92.

The sleeve 92 is at least partially received in the bore 70 of the caliper housing 60 and the unitary cap bushing 94. The sleeve 92 receives the fastener 90. For instance, the sleeve 92 may be configured as a hollow tube that may encircle the fastener 90. The hollow portion of the sleeve 92 that receives the fastener 90 may be sized slightly larger than the fastener 90 so as to permit insertion and rotation of the fastener 90 for assembly purposes but may otherwise generally center the sleeve 92 about the axis 72.

The sleeve 92 may have a first end and a second end. The first end may engage or contact the brake carrier 20. The second end may be disposed opposite the first end. In some configurations, the hollow portion of the sleeve 92 may have a larger diameter at the second end than at the first end. For instance, a head of the fastener 90 may be received in the larger diameter region of the hollow portion and engage a step surface that extends to the smaller diameter region of the hollow portion to inhibit axial movement of the sleeve 92 away from the brake carrier 20. Thus, the sleeve 92 may be fixedly positioned or stationarily positioned with respect to the brake carrier 20 when secured to the brake carrier 20 with the fastener 90. In some configurations, the sleeve 92 has an exterior surface 100.

The exterior surface 100 faces away from the axis 72. The exterior surface 100 is at least partially received in the bore 70 of the caliper housing 60. The exterior surface 100 may be an outside circumferential surface of the sleeve 92 and may be spaced apart from the bore surface 74. For instance, the exterior surface 100 may be disposed at a substantially constant radial distance from the axis 72. The exterior surface 100 may engage or contact the unitary cap bushing 94.

The unitary cap bushing 94 is at least partially received in the bore 70 of the caliper housing 60. The unitary cap bushing 94 may engage the brake caliper 22 by may be spaced apart from and may not contact or engage the brake carrier 20. The unitary cap bushing 94 is a one-piece component that may be made of any suitable material or materials, such as a polymeric material or a metal alloy. In some configurations, the unitary cap bushing 94 comprises a tubular wall 120, a cap 122, and a cavity 124.

The tubular wall 120 is at least partially received in the bore 70. For instance, the tubular wall 120 may encircle the axis 72 and may be spaced apart from the axis 72. The tubular wall 120 engages the sleeve 92 and may encircle the sleeve 92. The tubular wall 120 at least partially defines the cavity 124. In some configurations, the tubular wall 120 comprises an end surface 130, an exterior side 132, an interior side 134, a guide surface 136, and a step surface 138.

The end surface 130 is disposed at an end of the tubular wall 120 that is disposed opposite the cap 122. As such, the end surface 130 faces toward the brake carrier 20 and may be spaced apart from the brake carrier 20. The end surface 130 may be disposed substantially perpendicular to the axis 72 in one or more configurations. The term "substantially perpendicular" is used herein to designate features or axes that are the same as or very close to perpendicular and includes features that are within ±3° of being perpendicular each other. The end surface 130 may or may not be received in the bore 70.

The exterior side 132 faces away from the axis 72. In some configurations, the exterior side is an outside circumferential surface of the tubular wall 120 and may be disposed at a substantially constant radial distance from the axis 72. At least a portion of the exterior side 132 is received in the bore 70 and contacts or engages the brake caliper 22.

The interior side 134 is disposed opposite the exterior side 132. As such, the interior side 134 faces toward the axis 72. The interior side 134 may engage or contact the sleeve 92.

The guide surface 136, if provided, may facilitate insertion of the unitary cap bushing 94 into the bore 70, facilitate mounting of the flexible boot 30, or both. In some configurations, the guide surface 136 extends from the end surface 130 toward the cap 122. In some configurations, the guide surface 136 extends toward or to the exterior side 132. The guide surface 136 may be disposed at an oblique angle with respect to the end surface 130, the exterior side 132, or both. In some configurations, the guide surface 136 extends farther from the axis 72 as the guide surface 136 extends away from the end surface 130.

The step surface 138, if provided, may extend from the guide surface 136 to the exterior side 132. For instance, the step surface 138 may extend from an end of the guide surface 136 away from the axis 72 and to the exterior side 132. In some configurations, the step surface 138 is disposed substantially perpendicular to the axis 72, the exterior side 132, or both.

The cap 122 encloses an end of the unitary cap bushing 94 that is disposed opposite the end surface 130. In some configurations, the cap 122 extends from the axis 72 to the tubular wall 120. The cap 122 be disposed in the bore 70, partially disposed in the bore 70, or may not be disposed in the bore 70. The cap 122 is integrally formed with the tubular wall 120, which may eliminate a potential leak path between the cap 122 and the tubular wall 120. In some configurations, the cap 122 comprises a cap end wall 140 and a cap exterior side 142.

The cap end wall 140 is disposed at an end of the unitary cap bushing 94 that is disposed opposite the end surface 130. The cap end wall 140 may be spaced apart from the fastener 90, the sleeve 92, or both. The cap end wall 140 may intersect the axis 72 and extend to the cap exterior side 142.

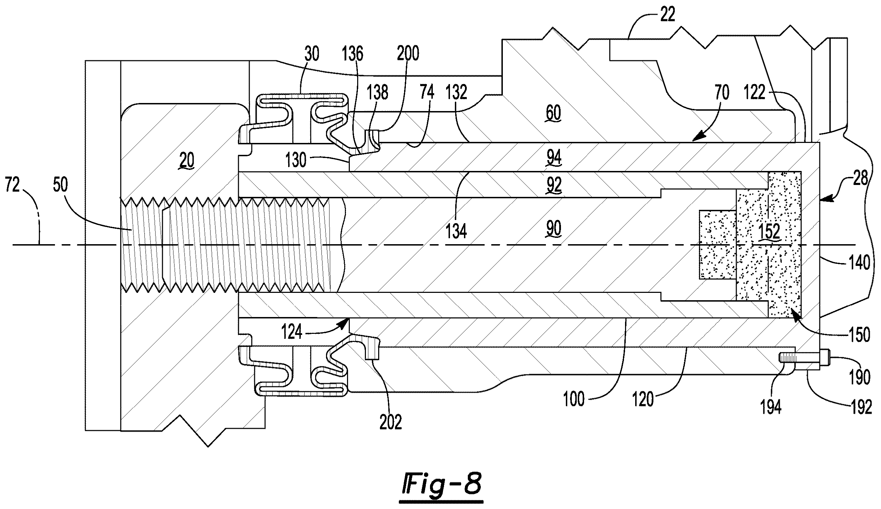

The cap exterior side 142 faces away from the axis 72 and may encircle the axis 72. In some configurations, the cap exterior side 142 is disposed farther from the axis 72 than the exterior side 132 of the tubular wall 120. The cap exterior side 142 may engage the brake caliper 22 in the bore 70. In other configurations, such as is shown in Figure 8, the cap exterior side 142 does not extend farther from the axis 72 than the exterior side 132 of the tubular wall 120. For instance, in Figure 8 the exterior side 132 of the tubular wall 120 and the cap exterior side 142 are disposed at a common radial distance from the axis 72. It is contemplated that the exterior side 132 and cap exterior side 142 may be disposed at a common radial distance from the axis 72 in the configurations shown in Figures 3-7. Similarly, it is contemplated that the cap exterior side 142 may extend farther from the axis 72 than the exterior side 132 in the configuration shown in Figure 8.

The cavity 124 is disposed inside the unitary cap bushing 94. The cavity 124 extends along the axis 72. For instance, the cavity 124 may extend from the end surface 130 to the cap end wall 140. In some configurations, the cavity 124 has a cylindrical configuration. The fastener 90 and the sleeve 92 are received in the cavity 124.

The fastener 90, the sleeve 92, and the unitary cap bushing 94 may cooperate to define a chamber 150. The chamber 150 may be a portion of the cavity 124. The chamber 150 may be disposed along the axis 72 between the fastener 90 and the cap 122. For instance, the chamber 150 may be positioned along the axis 72 between the fastener 90 and the cap end wall 140 and may be encircled by the tubular wall 120, the cap 122, or both. The chamber 150 is configured to receive or contain lubricant 152, such as grease. The lubricant 152 may fill or partially fill the chamber 150 and may facilitate sliding movement of the unitary cap bushing 94 along the sleeve 92. For instance, some lubricant 152 may enter a small gap between the exterior surface 100 of the sleeve 92 and the interior side 134 of the tubular wall 120 and facilitate sliding movement therebetween.

The unitary cap bushing 94 is secured to the brake caliper 22. As such, the unitary cap bushing 94 is fixedly positioned or stationarily positioned with respect to the brake caliper 22 when installed and thus the brake caliper 22 and unitary cap bushing 94 are moveable together along the axis 72 with respect to the brake carrier 20, the fastener 90, and the sleeve 92.

The brake caliper 22 and the unitary cap bushing 94 may be moveable between a retracted position and an extended position with respect to the brake carrier 20, the fastener 90, and the sleeve 92. The brake caliper 22 and the unitary cap bushing 94 may move from the retracted position to the extended position when braking or a braking force is applied, such as with a brake actuator. For example, the inboard brake pad assembly 24 may be moved from a retracted position in which the inboard brake pad assembly 24 may be spaced apart from the brake rotor 40 into contact with the brake rotor 40. Once the inboard brake pad assembly 24 contacts the brake rotor 40, a reaction force may then move the brake caliper 22 and unitary cap bushing 94 along the axis 72 in the first direction with respect to the brake carrier 20, the fastener 90, and the sleeve 92 to actuate the outboard brake pad assembly 24 into engagement with the opposite side of the brake rotor 40 to help slow rotation of the brake rotor 40 and an associated vehicle wheel. The brake caliper 22 and the unitary cap bushing 94 may move from the extended position to the retracted position when braking or a braking force is reduced or no longer applied.

The unitary cap bushing 94 may be secured to the brake caliper 22 in several ways.

In the configuration shown in Figure 3, the unitary cap bushing 94 is secured to the brake caliper 22 with an interference fit. The interference fit may be provided between the brake caliper 22 and the tubular wall 120, between the brake caliper 22 and the cap 122, or combinations thereof.

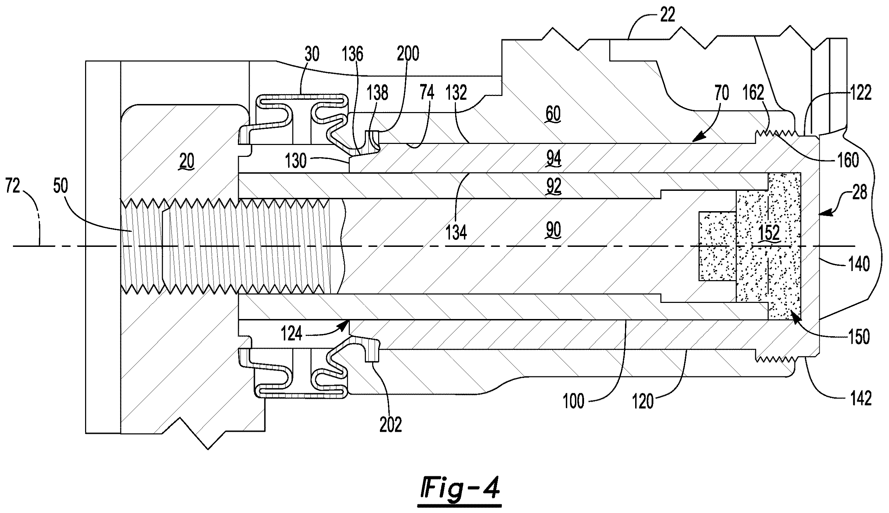

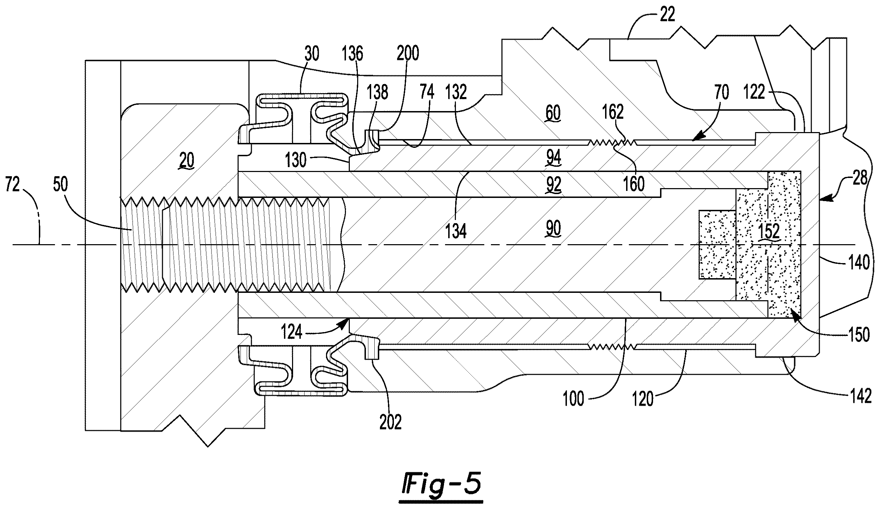

Referring to Figures 4 and 5, configurations are shown in which the unitary cap bushing 94 is secured to the brake caliper 22 with mating threads. The mating threads may be provided in any suitable location.

In the configuration shown in Figure 4, the mating threads are associated with the cap 122. The brake caliper 22 may comprise a threaded region 160. The threaded region 160 may be disposed in the bore 70 and may include one or more threads that spiral around the axis 72 and face toward the axis 72. The unitary cap bushing 94 may include a threaded portion 162 that is compatible with the threaded region 160. The threaded portion 162 may include one or more threads that spiral around the axis 72 and face away from the axis 72. The threaded portion 162 of the unitary cap bushing 94 mates with the threaded region 160 of the brake caliper 22 and secures the unitary cap bushing 94 to the brake caliper 22. The threaded portion 162 may be at least partially disposed in the bore 70 when the unitary cap bushing 94 is installed.

In the configuration shown in Figure 5, the mating threads are associated with the tubular wall 120. For example, the unitary cap bushing 94 may include a threaded portion 162 that is provided with the tubular wall 120. The threaded portion 162 may include one or more threads that spiral around the axis 72 and face away from the axis 72. The threaded portion 162 mates with the threaded region 160 of the brake caliper 22 and secures the unitary cap bushing 94 to the brake caliper 22. The threaded region 160, the threaded portion 162, or both may extend a greater or lesser length along the axis 72 than what is shown and may be positioned at a different location along the axis 72 than what is shown. For instance, the threaded region 160 and the threaded portion 162 may be disposed adjacent to the cap 122 or near the end surface 130. Providing the threaded region 160 and the threaded portion 162 along a short axial distance may allow a majority of the unitary cap bushing 94 to be inserted into the bore 70 before the mating threads engage and the unitary cap bushing 94 is rotated to tighten and secure the unitary cap bushing 94 to the brake caliper 22.

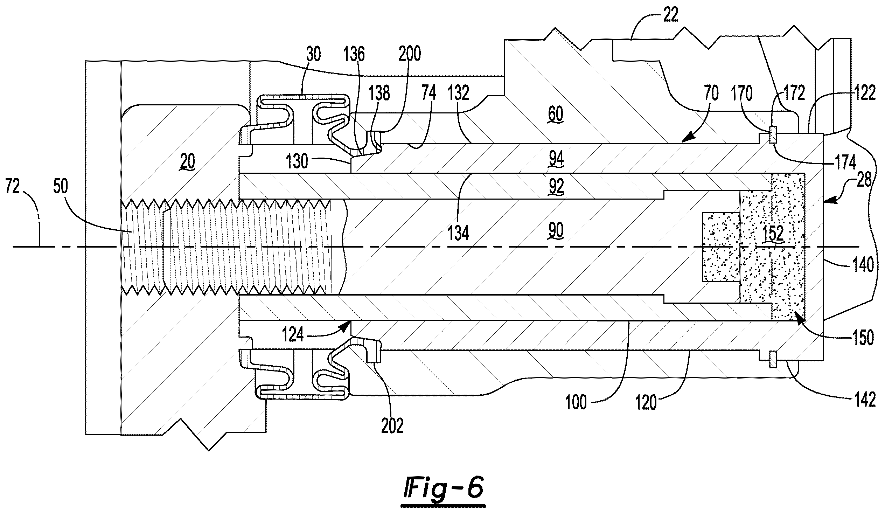

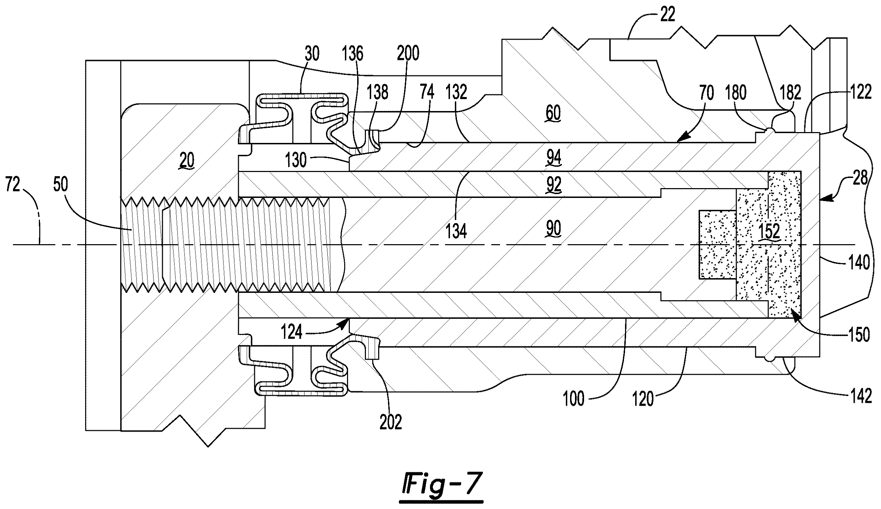

The unitary cap bushing 94 may be secured to the brake caliper 22 with a fastener or fastening feature. Some examples of configurations that employ fasteners are shown in Figures 6 and 7.

In the configuration shown in Figure 6, the unitary cap bushing 94 is secured to the brake caliper 22 with a fastener 170 that is disposed in the bore 70. The brake caliper 22 may include a brake caliper groove 172. The brake caliper groove 172 may encircle the axis 72 and the bore 70. The brake caliper groove 172 may extend from the bore 70 in a direction that extends away from the axis 72. The unitary cap bushing 94 may include a unitary cap bushing groove 174. The unitary cap bushing groove 174 may encircle the axis 72. The unitary cap bushing groove 174 may be provided with the tubular wall 120, the cap 122, or both. In the configuration shown, the unitary cap bushing groove 174 is provided with the cap 122 and extends from the cap exterior side 142 toward the axis 72. The fastener 170 may be received in the brake caliper groove 172 and the unitary cap bushing groove 174. The fastener 170 may have any suitable configuration. For example, the fastener 170 may be configured as a clip, snap ring, or the like.

In the configuration shown in Figure 7, another example is shown of the unitary cap bushing 94 that is secured to the brake caliper 22 that is disposed in the bore 70. In the example shown, the brake caliper 22 includes a recess 180. The recess 180 extends from the bore 70 in a direction that extends away from the axis 72. The recess 180 may or may not encircle the axis 72. The unitary cap bushing 94 includes a protrusion 182. The protrusion 182 may extend away from the axis 72 and may be received in the recess 180 to secure the unitary cap bushing 94 to the brake caliper 22. The recess 180 and the protrusion 182 may be provided at any suitable location. For instance, the protrusion 182 may be provided with the cap 122 as shown or may be provided with the tubular wall 120. It is also contemplated that the configuration shown in Figure 7 may be reversed, in which case the protrusion 182 may be provided with the brake caliper 22 and the recess 180 may be provided with the unitary cap bushing 94.

In the configuration shown in Figure 8, the unitary cap bushing 94 is secured to the brake caliper 22 with a fastener that is not disposed in the bore 70. As such, the fastener 190 is disposed outside of the bore 70 in the brake caliper 22. As an example, the cap 122 may comprise a cap flange 192. The cap flange 192 may be disposed outside of the bore 70 and extend away from the axis 72. In some configurations, the cap flange 192 may protrude away from the axis 72 and or overlap a portion of the brake caliper 22. The fastener 190 may secure the cap flange 192 to the brake caliper 22. The fastener 190 may be a separate component from the cap flange 192 or may be integral with cap flange 192. For instance, the fastener 190 may be a threaded fastener, such as a bolt or screw, or a non-threaded fastener, such as a pin or clip, that extends through a hole or slot in the cap flange 192 and into a corresponding fastener receiving hole 194 in the brake caliper 22. As another example, the fastener 190 may be integrally formed with the cap flange 192. For instance, the fastener 190 may be a protrusion, such as a clip or pin, that may extend from the cap flange 192 into the fastener receiving hole 194 in the brake caliper 22. Such a fastener 190 may be secured in any suitable manner, such as with an interference fit, mating features (e.g., barbs, hooks, splines, protrusions, recesses, etc.), or the like. It is contemplated that multiple cap flanges 192 and fasteners 190 may be provided and that the fasteners 190 may have the same or different configurations.

Referring primarily to Figure 3, a flexible boot 30 may extend between the brake carrier 20 and the brake caliper 22 or between the guide pin assembly 28 and the brake caliper 22. The flexible boot 30 is configured to flex in response to movement of the brake caliper 22. For instance, the flexible boot 30 may expand or unfold when the brake caliper 22 moves in a first direction along the axis 72 with respect to the brake carrier 20 and may contract or fold when the brake caliper 22 moves in a second direction or opposite direction with respect to the brake carrier 20. The flexible boot 30 may comprise one or more mounting rims 200. One mounting rim 200 may be secured to the brake carrier 20 and another mounting rim 200 may be secured to the brake caliper 22. Only the mounting rim 200 that engages the brake caliper 22 is numbered for clarity.

The flexible boot 30 may be secured in various ways. In the configurations shown, the flexible boot 30 is illustrated with the flexible boot 30 being secured between the unitary cap bushing 94 and the brake caliper 22; however, it is also contemplated that the flexible boot 30 may not be secured between the unitary cap bushing 94 and the brake caliper 22. For instance, the mounting rim 200 of the flexible boot 30 may not contact or engage the unitary cap bushing 94 and may be secured with a fastener, such as a ring that is press fit into the brake caliper 22 and captures the mounting rim 200 between the ring and the brake caliper 22.

The mounting rim 200 associated with the brake caliper 22 may be secured between the unitary cap bushing 94 and the brake caliper 22. For instance, the mounting rim 200 may be disposed in the bore 70 and may encircle or extend at least partially around the unitary cap bushing 94 such that the mounting rim 200 is pinched or secured between the brake caliper 22 and the tubular wall 120. In some configurations, the mounting rim 200 is received in a brake caliper boot groove 202. The brake caliper boot groove 202 may encircle the bore 70 and extend from the bore 70 in a direction that extends away from the axis 72. In some configurations, the mounting rim 200 of the flexible boot 30 engages the guide surface 136 and optionally the step surface 138.

The brake assembly 10 may be assembled by mounting the sleeve 92 to the brake carrier 20 with the fastener 90. Lubricant 152 may be injected into the cavity 124 of the unitary cap bushing 94, which may position lubricant 152 proximate the cap end wall 140. The amount of lubricant 152 that is injected may be metered or measured so that a sufficient amount of lubricant 152 is provided and so that the amount of lubricant can be accommodated by the chamber 150. The unitary cap bushing 94 may be inserted into the bore 70 in the brake caliper 22 before or after lubricant 152 is injected.

Next, the unitary cap bushing 94 and brake caliper 22 may then be aligned with the sleeve 92 such that the sleeve 92 is insertable into the cavity 124 of the unitary cap bushing 94. Relative movement along the axis 72 may be provided between the sleeve 92 and the unitary cap bushing 94 to insert or position the sleeve 92 within the unitary cap bushing 94. Insertion of the sleeve 92 may facilitate the distribution of lubricant 152 between the sleeve 92 and the interior side 134 of the tubular wall 120 of the unitary cap bushing 94. Alignment and insertion may be aided by the tapering of the guide surface 136 of the unitary cap bushing 94.

In configurations in which a flexible boot 30 is disposed in the bore 70 of the brake caliper 22 and is sandwiched between the unitary cap bushing 94 and the brake caliper 22, the mounting rim 200 of the flexible boot 30 may be inserted into the bore 70 and the brake caliper boot groove 202, if provided, before the unitary cap bushing 94 is fully inserted or secured to allow the unitary cap bushing 94 to help secure the flexible boot 30, thereby reducing or eliminating the need for additional fasteners. The guide surface 136 may act as a wedge and may engage and exert force against the mounting rim 200 that forces the mounting rim radially outward as the unitary cap bushing 94 is moved along the axis 72 toward the brake carrier 20, thereby securing the mounting rim 200 in the brake caliper boot groove 202.

A brake assembly and guide pin assembly as described employs a cap that is integral with a tubular wall rather than providing a cap that is a separate component, such as a cap that is press-fit into an end of the bore in the brake caliper and that does not support or slide along a sleeve. A unitary cap bushing has fewer potential lubricant leak paths, may better contain lubricant, may better separate the lubricant from external contaminants, and may help prevent lubricant degradation. Moreover, a unitary cap bushing may avoid issues associated with caps that are separate individual parts, such as misalignment and improper installation of a cap during assembly or maintenance, which can result in improper sealing, leakage, or damage to the cap. Preventing or reducing lubricant degradation and lubricant leakage may facilitate smooth axial movement of the brake caliper with respect to the brake carrier, which in turn may help reduce or avoid brake pad drag and uneven friction material wear, thereby reducing drag forces and helping improve brake pad assembly life. The unitary cap bushing may allow lubricant to be injected into the unitary cap bushing prior to installation, which may allow lubricant to be provided near the sliding surfaces of the sleeve and the unitary cap bushing and without disassembling the fastener and sleeve from the brake carrier, thereby reducing maintenance time and associated costs and labor. In addition, preventative maintenance or inspection may be performed more efficiently with a unitary cap bushing since the unitary cap bushing may be removed and reinstalled without disassembling the brake caliper, disassembling the brake caliper from the brake carrier, removing the sleeve and fastener from the brake carrier, or combinations thereof.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A brake assembly comprising:
a brake carrier;
a brake caliper that defines a bore that extends along an axis; and
a guide pin assembly that slidably couples the brake caliper to the brake carrier, the guide pin assembly comprising:
a unitary cap bushing that is at least partially received in the bore and that is secured to the brake caliper, wherein the unitary cap bushing is a one-piece component that comprises a tubular wall and a cap, wherein the tubular wall encircles and at least partially defines a cavity that extends along the axis and comprises an end surface that is disposed opposite the cap, and the cap extends from the tubular wall and encloses an end of the unitary cap bushing;
a sleeve that is received in the cavity and that engages the tubular wall such that the unitary cap bushing is moveable along the axis with respect to the sleeve; and
a fastener that is disposed in the sleeve and that couples the sleeve to the brake carrier.

2. The brake assembly of claim 1 wherein the tubular wall further comprises an exterior side that faces away from the axis and engages the brake caliper in the bore, the cap further comprises a cap exterior side that faces away from the axis and engages the brake caliper in the bore, and the cap exterior side is disposed farther from the axis than the exterior side of the tubular wall.

3. The brake assembly of claim 1 wherein the tubular wall further comprises an exterior side that faces away from the axis and engages the brake caliper in the bore, the cap further comprises a cap exterior side that faces away from the axis and engages the brake caliper in the bore, and the cap exterior side and the exterior side are disposed at a common radial distance from the axis.

4. The brake assembly of any previous claim wherein the brake caliper further comprises a threaded region that is disposed in the bore and the unitary cap bushing further comprises a threaded portion that mates with the threaded region and secures the unitary cap bushing to the brake caliper.

5. The brake assembly of claim 4 wherein the threaded portion of the unitary cap bushing is disposed on the cap.

6. The brake assembly of claim 4 wherein the threaded portion of the unitary cap bushing is disposed on the tubular wall.

7. The brake assembly of any previous claim wherein the unitary cap bushing is secured to the brake caliper with a fastener that is disposed in the bore, optionally wherein the brake caliper further comprises a brake caliper groove that encircles the bore and extends away from the axis from the bore, the cap further comprises a cap exterior side that faces away from the axis and a cap groove that extends from the cap exterior side toward the axis, and the fastener is received in the brake caliper groove and the cap groove.

8. The brake assembly of any of claims 1 to 6 wherein the unitary cap bushing is secured to the brake caliper with a fastener that is disposed outside of the bore, optionally wherein the cap further comprises a cap flange that is disposed outside of the bore and extends away from the axis, wherein the fastener secures the cap flange to the brake caliper.

9. The brake assembly of any of claims 1 to 6 wherein the brake caliper further comprises a recess that extends away from the axis from the bore, the unitary cap bushing further comprises a protrusion that extends away from the axis, and the protrusion is received in the recess and secures the unitary cap bushing to the brake caliper.

10. The brake assembly of any previous claim wherein the fastener, the sleeve, and the unitary cap bushing cooperate to define a chamber that is disposed along the axis between the fastener and the cap, wherein the chamber contains lubricant.

11. The brake assembly of any previous claim wherein the sleeve engages the brake carrier and the unitary cap bushing is spaced apart from and does not contact the brake carrier.

12. The brake assembly of any previous claim further comprising a flexible boot that extends between the brake carrier and the brake caliper, wherein a mounting rim of the flexible boot is disposed in the bore and is secured between the unitary cap bushing and the brake caliper, optionally wherein the brake caliper further comprises a brake caliper boot groove that encircles the bore and extends away from the axis from the bore, and wherein the mounting rim of the flexible boot is disposed in the brake caliper boot groove, optionally wherein the tubular wall further comprises an exterior side that faces away from the axis and engages the brake caliper in the bore, and a guide surface that extends from the end surface toward the exterior side, wherein the flexible boot engages the guide surface.

13. The brake assembly of claim 12 wherein the guide surface is disposed at an oblique angle with respect to the end surface and the exterior side.

14. The brake assembly of claim 12 wherein the guide surface extends farther from the axis as the guide surface extends away from the end surface, optionally wherein the tubular wall further comprises a step surface that extends from an end of the guide surface to the exterior side, optionally wherein the mounting rim engages the step surface.

15. A unitary cap bushing for a brake caliper, the unitary cap bushing comprising:
a tubular wall that encircles and at least partially defines a cavity, the tubular wall comprising an end surface; and
a cap that is disposed opposite the end surface and extends from the tubular wall, wherein the cap encloses an end of the tubular wall and the unitary cap bushing is a one-piece component.
